# EUROPÄISCHE PATENTSCHRIFT

(11) **EP 0 541 828 B1**
(45) Veröffentlichungstag und Bekanntmachung des Hinweises auf die Patenterteilung: **01.02.1995**
(21) Anmeldenummer: 91118748.2
(22) Anmeldetag: 04.11.1991
(51) Int. Cl.: G01D 5/36

(54) **Vorrichtung zur Erzeugung oberwellenfreier periodischer Signale**
Apparatus for producing upper-harmonic free periodic signals
Appareil pour produire des signaux périodiques, avec un absence d'harmoniques supérieurs

(43) Veröffentlichungstag der Anmeldung: 19.05.1993
(73) Patentinhaber: Dr. Johannes Heidenhain GmbH, D-83292 Traunreut (DE)
(72) Erfinder: Franz, Andreas Dr., W-8221 Kienberg (DE)

(56) Entgegenhaltungen:
- EP-A- 0 250 711
- DE-A- 3 239 108
- DE-C- 3 412 128
- US-A- 4 680 466
- US-A- 4 795 901

## Beschreibung

Die Erfindung bezieht sich auf eine Vorrichtung gemäß dem Oberbegriff des Anspruches 1.

Derartige Vorrichtungen werden zur Messung von Lageänderungen zweier relativ zueinander beweglicher Objekte benötigt. Dabei werden die unterschiedlichsten physikalischen Abtastprinzipien benutzt. Man unterscheidet zwischen fotoelektrischer, magnetischer, induktiver und kapazitiver Abtastung.

Das Grundprinzip ist jedoch allen Methoden gemeinsam: Eine periodische Meßteilung wird abgetastet und das so erzeugte Abtastsignal wird als Meßsignal ausgewertet.

Die Periode der gewonnenen Abtastsignale wird durch die Teilungsperiode oder das Inkrement der Teilung des Teilungsträgers bestimmt. Das Inkrement wird bei fotoelektrischen Meßeinrichtungen durch die Breiten eines lichtdurchlässigen Streifens und eines lichtundurchlässigen Streifens in Meßrichtung gebildet. Bei der Relativbewegung zwischen der Abtasteinheit und der Meßteilung des Teilungsträgers wird von jedem abgetasteten Inkrement ein Zählimpuls abgeleitet, vorzeichenrichtig aufsummiert und die Summe steht als Meßwert zur Verfügung.

Die aus den Teilungen der Teilungsträger bei fotoelektrischen, magnetischen, induktiven und kapazitiven Meßeinrichtungen gewonnenen periodischen Analogsignale weisen im allgemeinen keinen reinen sinusförmigen Verlauf auf, sondern sind beispielsweise infolge von Ungenauigkeiten der Teilungen oberwellenbehaftet. Diese Ungenauigkeiten der Teilungen werden zum Beispiel durch unterschiedliche Abstände der lichtdurchlässigen und lichtundurchlässigen Streifen oder durch eine Kantenunschärfe dieser Streifen hervorgerufen. Um die gewonnenen Analogsignale weitgehend oberwellenfrei zu halten, müssen hohe Anforderungen an die Genauigkeit der Teilungen gestellt werden. Zur Bildung von genauen Positionsmeßwerten für jede Teilungsperiode und um zur weiteren Erhöhung der Auflösung die Teilungsperioden der Teilung durch Bildung von Interpolationswerten exakt unterteilen zu können, muß das aus dieser Teilung gewonnene Analogsignal oberwellenfrei sein; eine Bildung von Interpolationswerten beispielsweise mittels eines Rechners ist in der DE-OS 27 29 697 beschrieben.

Weiterhin sind Meßeinrichtungen bekannt, die dreieckförmige oder trapezförmige Analogsignale liefern, die naturgemäß stets oberwellenbehaftet sind.

Zur Eliminierung von Oberwellen sind aus dem Stand der Technik zahlreiche Vorschläge bekannt.

Als Beispiele seien die EP-A- 0 250 711 und die US-A- 4 680 466 genannt. Beiden Dokumenten ist zu entnehmen, daß durch besondere Dimensionierung und Anordnung von Abtastelementen Oberwellen gezielt ausgefiltert bzw. vermieden werden können.

In der EP-A- 0 250 711 wird spezifiziert, Fotoelemente so anzuordnen und zu dimensionieren, daß das Abtastsignal einer Fourieranalyse unterzogen wird.

In der US-A- 4 680 466 ist hingegen eine bestimmte Anordnung der Schlitzlöcher der Phasenplatte beschrieben, durch deren Versatz Oberwellen reduziert werden können.

Aus der DE-PS 19 41 731 ist eine fotoelektrische Längenmeßeinrichtung bekannt, bei der zur Gewinnung eines oberwellenfreien Analogsignals bei der Abtastung der Teilung eines Teilungsträgers eine Frequenzfilterblende mit einem sinusförmigen Durchlässigkeitsverlauf vorgesehen ist. Bei dieser Meßeinrichtung muß eine spezielle Frequenzfilterblende hergestellt und eingebaut werden. Zudem ist diese Meßeinrichtung auf das fotoelektrische Durchlichtmeßprinzip beschränkt, bei dem ein aus periodischen Helligkeitsschwankungen aufgebautes Streifensystem erzeugt wird.

Der Erfindung liegt die Aufgabe zugrunde, eine Vorrichtung zur Gewinnung oberwellenfreier periodischer Signale anzugeben, die zu diesem Zweck keiner zusätzlichen Elemente bedarf und universell einsetzbar ist.

Diese Aufgabe wird erfindungsgemäß durch die Merkmale des Anspruches 1 gelöst.

Die mit der Erfindung erzielten Vorteile bestehen insbesondere darin, daß auf einfache Weise die Gewinnung oberwellenfreier periodischer Signale lediglich mit abgewandelten herkömmlichen Mitteln bekannter Positionsmeßeinrichtungen ermöglicht wird, ohne daß zusätzliche Elemente wie Frequenzfilterblenden erforderlich sind und ohne daß besondere Anforderungen an die Genauigkeit der Teilung gestellt werden müssen.

Vorteilhafte Weiterbildungen der Erfindung entnimmt man dem abhängigen Anspruch.

Ausführungsbeispiele der Erfindung werden anhand der Zeichnung näher erläutert.

Es zeigt
- Figur 1: eine Längenmeßeinrichtung im Querschnitt;
- Figur 2: schematisch eine Abtasteinheit einer fotoelektrischen Längenmeßeinrichtung;
- Figur 3: einen vergrößerten Ausschnitt einer Abtastteilung aus
- Figur 4: , die eine Abtasteinheit zeigt;
- Figur 5: einen vergrößerten Ausschnitt einer Abtastteilung aus
- Figur 6: , die eine weitere Abtasteinheit zeigt.

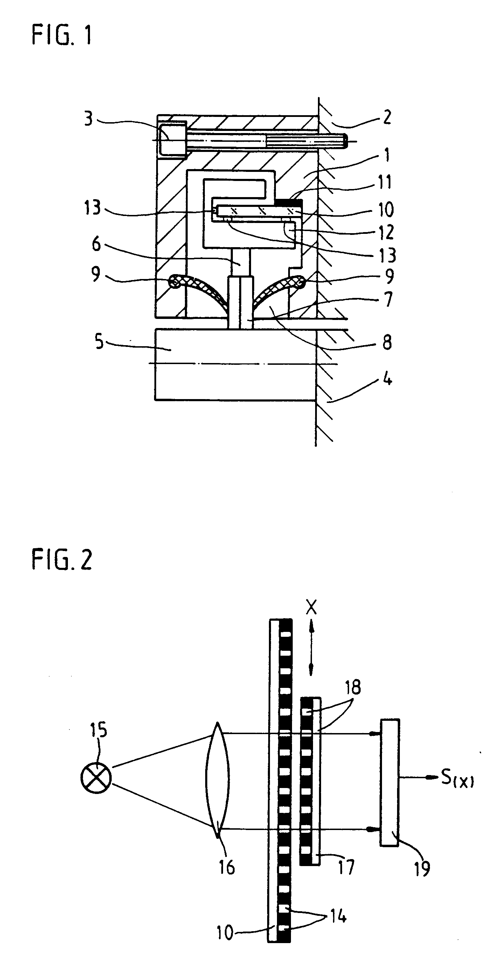

In Figur 1 ist eine Längenmeßeinrichtung im Querschnitt dargestellt, deren Gehäuse 1 in Form eines Hohlprofils an einem Bett 2 einer nicht dargestellten Bearbeitungsmaschine mittels einer Schraubverbindung 3 befestigt ist. An einem Schlitten 4 der Bearbeitungsmaschine ist ein Montagefuß 5 mit einem Mitnehmer 6 in beliebiger Weise befestigt, der über eine schneidenförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab 10 mittels einer elastischen Klebeschicht 11 angebracht, an dem sich eine Abtasteinheit 12 über Rollen 13 abstützt; die Relativbewegung des Schlittens 4 bezüglich des Betts 2 wird vom Mitnehmer 6 auf die Abtasteinheit 12 übertragen.

Gemäß Figur 2 sind zur Abtastung einer Teilung 14 des Maßstabs 10 in der Abtasteinheit 12 eine Lichtquelle 15, ein Kondensor 16, eine Abtastplatte 17 mit einer Teilung 18 und ein Photoelement 19 angeordnet. Der von der Lichtquelle 15 ausgehende Lichtstrom wird vom Kondensor 16 parallel gerichtet, durchsetzt die Teilungen 14, 18 des Maßstabs 10 und der Abtastplatte 17 und fällt anschließend auf das Photoelement 19. Bei der Bewegung der Abtasteinheit 12 mit der Abtastplatte 17 in Meßrichtung X gegenüber dem feststehenden Maßstab 10 wird der Lichtstrom an den Teilungen 14, 18 moduliert, so daß das Photoelement 19 ein periodisches elektrisches Analogsignal S (X) liefert, das ausgewertet, gezählt und in digitaler Form als Positionsmeßwert zur Anzeige gebracht wird.

Das vom Photoelement 19 gelieferte periodische Analogsignal S (X) ist im allgemeinen z.B. aufgrund von Ungenauigkeiten der Teilungen 14, 18 oberwellenbehaftet und kann als Funktion des Meßweges X durch eine Fourierreihe dargestellt werden.

Zur Gewinnung oberwellenfreier periodischer Signale wird in der DE 32 39 108 C2 vorgeschlagen, die Bandbreite (Anzahl der Frequenzen oder Wellen) des Analogsignals zu ermitteln, die Teilungsperiode der Teilung jeweils mit Abtastelementen abzutasten, die von den Abtastelementen gelieferten periodischen Analogsignale zur Ermittlung von Fourierkoeffizienten der Grundwelle des Analogsignals einer Fourieranalyse zu unterziehen und die Fourierkoeffizienten als oberwellenfreie periodische Signale zur Bildung von Positionsmeßwerten auszuwerten.

Ein mathematisch äquivalenter, aber ausführungsmäßig völlig anderer Ansatz zur Oberwellenfilterung ist aus der DE 34 12 128 C1 als sogenannte arcsin-Abtastung bekannt. Nach einem 1.Gitter entsteht eine Intensitätsverteilung (Gitterbild im Schattenwurf oder Selbstabbildung in der Talbot-Ebene) die mit einem Gitter variabler Teilung abgetastet wird, wie in der genannten Druckschrift dargestellt ist. Nachteilig ist hierbei, daß die ideale Verteilung der arcsin-Abtastteilung je nach Gesamtzahl der Linien (d.h. je nach Breite des Abtastfensters) verschieden ist.

Bei der Abtastung mit dieser sogenannten arcsin-Teilung, wie sie aus der DE 34 12 128 C1 bekannt ist, ist eine gleichmäßige Ausleuchtung des gesamten Abtastbereiches unbedingt notwendig. Nach der Lehre dieser Druckschrift unterdrückt ein arcsin-Filter alle ungeraden Harmonischen bis zur Bandbreite N, wenn zur Abtastung 2N Abtastfelder vorgesehen sind. Um möglichst oberwellenfreie Signale zu erzeugen, muß nach der dortigen Aussage die Bandbreite N möglichst hoch angesetzt werden.

Sehr hohe Ordnungen beeinflussen jedoch in der Praxis das Meßsignal nicht mehr bedeutend.

In der Praxis wird es vielfach genügen, alle Harmonischen bis zur 3. oder 5. Ordnung auszufiltern. Die 3. bzw. 5. Harmonische kann aber schon durch eine Gruppe aus 3 bzw. 5 Abtastfeldern 21, 22, 23 bzw. 25, 26, 27, 28 wirkungsvoll eliminiert werden, wobei die exakte Position allerdings nicht mehr durch die arcsin-Funktion gegeben ist, die streng genommen nur für den Grenzfall unendlich vieler Teilstriche gültig ist.

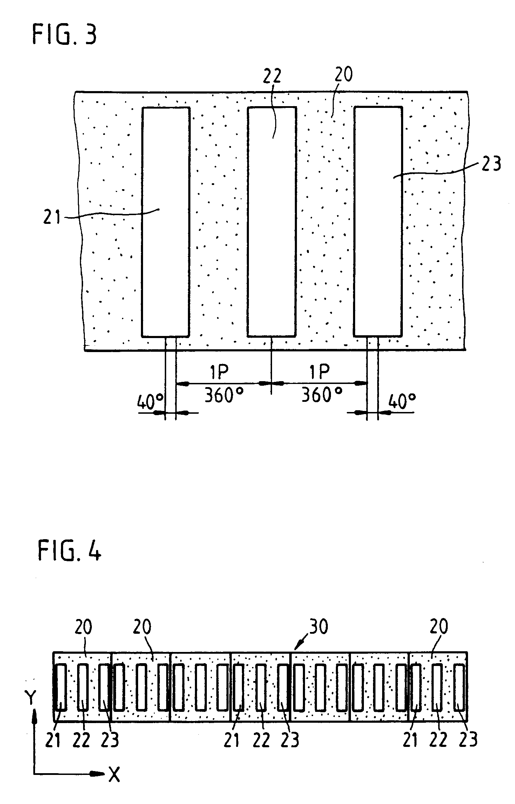

Es wird deshalb vorgeschlagen, eine Abtasteinheit mit Filterfunktion für Oberwellen aus vielen Abtastteilungen 20 bzw. 24 mit jeweils nur wenigen Abtastfeldern 21, 22, 23 bzw. 25, 26, 27, 28, 29 zusammenzusetzen, wie in den Figuren 3 bis 6 gezeigt ist. Solche Abtastteilungen sind unempfindlich gegen Veränderung der Ausdehnung in y-Richtung. Da eine Abtasteinheit 30 bzw. 31 in x-Richtung aus vielen solchen identischen Elementen besteht, ist auch eine Veränderung in x-Richtung unschädlich.

Es entsteht demgemäß eine Abtasteinheit, die aus vielen kleinen, identischen Filterelementen aufgebaut ist, bei denen es dann keine Rolle mehr spielt, wie viele davon letztlich zum Signal beitragen.

In Figur 3 ist ein vergrößerter Ausschnitt einer Abtastteilung 20 aus Figur 4 dargestellt. Diese Abtastteilung 20 dient zur Filterung der dritten Oberwelle und besteht demgemäß aus drei Abtastfeldern 21, 22, 23, deren Abtastfeldmitten zueinander einen Versatz von 40° aufweisen, um die 3. Harmonische (dritte Oberwelle) hinreichend gut auszufiltern.

Eine Vielzahl solcher Abtastteilungen 20 ist gemäß Figur 4 durch Aneinanderreihung in Meßrichtung zu einer Abtasteinheit 30 zusammengefaßt. Dabei entspricht das Raster der Aneinanderreihung von Abtastteilungen 20 der Teilungsperiode P der abzutastenden Meßteilung 14.

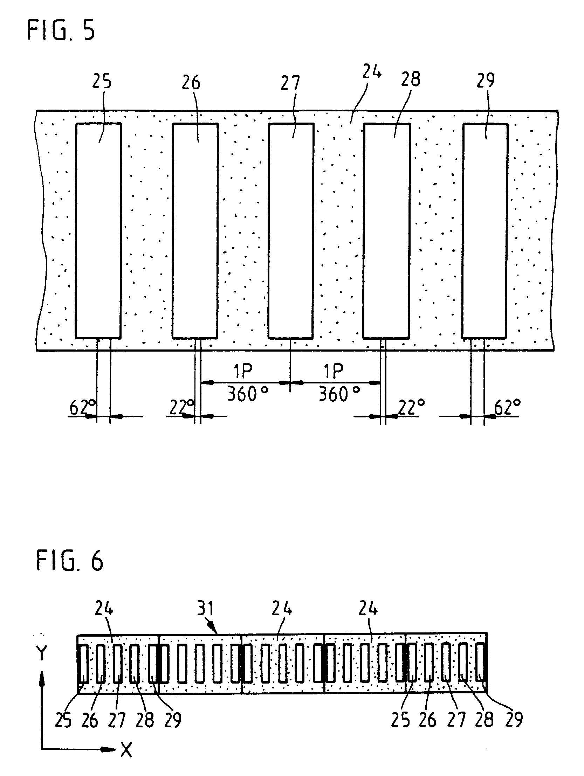

Für die Filterung der 5. Harmonischen ist eine Abtasteinheit 31 gemäß Figur 6 vorgesehen. Analog zur vorbeschriebenen Ausführungsform besteht die Abtasteinheit 31 aus einer Vielzahl in Meßrichtung aneinandergereihter identischer Abtastteilungen 24, von denen eine als vergrößerter Ausschnitt in Figur 5 dargestellt ist. Die Abtastfeldmitten der Abtastfelder 25, 26, 27, 28, 29 weisen hier einen Versatz von 22° bzw. 62° auf, so daß die fünf Abtastfelder 25, 26, 27, 28, 29 mit hinreichender Qualität die fünfte Oberwelle ausfiltern.

Der angegebene Versatz richtet sich nach der auszufilternden Oberwelle und entspricht im Gegensatz zum Stand der Technik nicht einer arcsin-Funktion.

## Patentansprüche

1. Vorrichtung zur Gewinnung von bis zu einer vorbestimmbaren Bandbreite oberwellenfreien Signalen, die durch Abtastung einer periodischen Meßteilung (14) mit mehreren Abtastteilungen (20 bzw. 24) erzeugt werden, wobei die Abtastteilungen (20 bzw. 24) jeweils eine Anzahl von Abtastfeldern (21, 22, 23 bzw. 25, 26, 27, 28, 29) aufweisen und die Anzahl der Abtastfelder (21, 22, 23 bzw. 25, 26, 27, 28, 29) der Ordnungszahl (3 bzw. 5) der auszufilternden Harmonischen entspricht, wobei die Abtastfelder (21, 22, 23 bzw. 25, 26, 27, 28, 29) zueinander einen Versatz aufweisen, der von der auszufilternden Harmonischen (3 bzw. 5) abhängig ist, dadurch gekennzeichnet, daß die Abtastteilungen (20 bzw. 24) untereinander identisch und im Raster ganzer Teilungsperioden (P) der Meßteilung (14) in Meßrichtung hintereinander angeordnet sind.

2. Vorrichtung nach Anspruch 1, dadurch gekennzeichnet, daß die Abtastfelder (21, 22, 23 bzw. 25, 26, 27, 28, 29) vorzugsweise die halbe Breite der Teilungsperiode (P) der abzutastenden Meßteilung (14) aufweisen.

## Claims

1. Apparatus for producing upper-harmonic free signals to a bandwidth which may be predetermined, that are generated by scanning a periodic graduated scale (14) with several scanning graduations (20 or 24), wherein the scanning graduations (20 or 24) each have a number of scanning fields (21, 22, 23 or 25, 26, 27, 28, 29) and the number of scanning fields (21, 22, 23 or 25, 26, 27 ,28, 29) correspond to the order number (3 or 5) of the harmonic to be filtered out, wherein the scanning fields (21, 22, 23 or 25, 26, 27, 28, 29) are in a staggered arrangement, which is dependent on the harmonic (3 or 5) to be filtered out, characterised in that said scanning graduations (20 or 24) are identical to one another and are arranged one behind the other in the direction of measurement in the grid of whole graduation periods (P) of the graduated scale (14).

2. Apparatus according to Claim 1, characterised in that the scanning fields (21, 22, 23 or 25, 26, 27, 28, 29) are preferably half the width of the graduation period (P) of the graduated scale (14) to be scanned.

## Revendications

1. Dispositif pour la production de signaux qui, jusqu'à une largeur de bande que l'on peut prédéterminer, sont exempts d'harmoniques et sont produits par lecture d'une graduation de mesure (14) périodique avec plusieurs graduations de lecture (20 ou 24), les graduations de lecture (20 ou 24) présentant chacune un certain nombre de zones de lecture (21, 22, 23 ou 25, 26, 27, 28, 29) et le nombre de zones de lecture (21, 22, 23 ou 25, 26, 27, 28, 29) correspondant à l'ordre (3 ou 5) des harmoniques à éliminer, les zones de lecture (21, 22, 23 ou 25, 26, 27, 28, 29) étant décalées l'une par rapport à l'autre d'une valeur qui dépend de l'harmonique (23 ou 5) à éliminer, caractérisé par le fait que les graduations de lecture (20 ou 24) sont identiques entre elles et sont disposées l'une derrière l'autre dans la direction de mesure dans le réseau de périodes de graduation (P) complètes de la graduation de mesure (14).

2. Dispositif selon la revendication 1, caractérisé par le fait que les zones de lecture (21, 22, 23 ou 25, 26, 27, 28, 29) ont de préférence une largeur égale à la moitié de la largeur de la période de graduation (P) de la graduation de mesure (14) lue.
